# FASCICULE DE BREVET EUROPEEN

(11) **EP 3 451 466 B1**
(45) Date de publication et mention de la délivrance du brevet: **20.05.2020**
(21) Numéro de dépôt: 18306095.3
(22) Date de dépôt: 09.08.2018
(51) Int. Cl.: H01R 25/14, H01R 41/00, B60M 1/30, H01R 4/48, H01R 4/58

(54) **DISPOSITIF DE CONNEXION DE DEUX ÉLÉMENTS CONDUCTEURS D'UN RAIL D'ALIMENTATION**
VERBINDUNGSVORRICHTUNG VON ZWEI LEITERELEMENTEN EINER VERSORGUNGSSCHIENE
DEVICE FOR CONNECTING TWO CONDUCTIVE ELEMENTS OF A POWER RAIL

(30) Priorité: 01.09.2017 FR 1758106
(43) Date de publication de la demande: 06.03.2019
(73) Titulaire: FELS, 67400 Illkirch-Graffenstaden (FR)
(72) Inventeur: ARNOLD, Claude, 67100 Strasbourg (FR)
(74) Mandataire: Nuss, Laurent

(56) Documents cités:
- DE-A1- 2 238 958
- US-A- 3 801 751

## Description

La présente invention se rapporte au domaine des rails d'alimentation par contact glissant et plus particulièrement au domaine des systèmes de connexion de deux éléments conducteurs de rail.

La construction d'un réseau de rails d'alimentation par contact glissant peut conduire à des architectures complexes qui parfois imposent une certaine modularité pour faciliter leur installation et leur maintenance. La fixation de deux portions de rails successives doit, d'une part, garantir une bonne connexion électrique mais également, d'autre part, maintenir une continuité mécanique au niveau d'une surface de contact glissant.

Actuellement, certaines solutions d'assemblage font intervenir des mécanismes de fixation par vis disposés sur une ou plusieurs faces différentes de la surface de contact glissant. Ces mécanismes de fixation peuvent faire intervenir des broches, éventuellement combinées à un mécanisme de serrage par vis ou encore à un sertissage.

Cependant, ces solutions d'assemblage peuvent non seulement avoir comme inconvénient d'empêcher toute réversibilité de la fixation mais également imposer l'utilisation d'au moins un outil pour mettre en place le mécanisme de maintien de l'assemblage des portions de rails entre elles. Aussi, la séparation de portions de rails, par exemple dans le cadre d'un démontage, d'un remplacement ou d'une réparation, est rendue plus complexe, voire impossible sans cassure, avec ces mécanismes de maintien.

Par ailleurs, les extrémités de ces segments de rails présentent également comme inconvénient d'être exposées aux chocs lors de leurs transports ou manipulations. La déformation d'une de ces extrémités ne permet alors plus au segment de rails d'avoir des surfaces de contact glissant optimales ou d'effectuer correctement une connexion électrique efficace.

DE 22 38 958 A1 divulgue un dispositif selon le préambule de la revendication 1.

La présente invention a pour but de pallier ces inconvénients en proposant un dispositif d'assemblage réversible de portion de rails qui ne nécessite pas l'utilisation d'un outil pour le montage tout en conservant une surface de contact glissant libre d'accès.

L'invention a ainsi pour objet un dispositif de connexion de deux éléments conducteurs d'un rail d'alimentation comprenant une surface de contact glissant, caractérisé en ce que le dispositif comprend :
- deux pattes de connexion formées par une extrémité de chacun des deux éléments conducteurs, ces pattes de connexion étant agencées pour être disposées dans des plans respectifs parallèles et décalés par rapport à la surface de contact glissant du rail,
- une pièce de jonction des deux pattes de connexion comportant au moins une surface de contact disposée de niveau avec la surface de contact glissant des conducteurs,
et en ce que la pièce de jonction comprend une structure en cavalier qui positionne ses jambes de part et d'autre des pattes de connexion mise en contact de façon à prendre en tenaille les pattes de connexion des éléments conducteurs, tout en réalisant une connexion électrique entre au moins la patte de connexion d'un élément conducteur et la surface de contact de la pièce de jonction disposée de niveau avec la surface de contact glissant des conducteurs.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
- la figure 1 se rapporte à une représentation schématique d'un premier exemple de réalisation d'un dispositif de connexion assemblé selon l'invention selon une vue en perspective,
- les figures 2 et 3 se rapportent à des représentations schématiques respectives des pattes de connexion désassemblées d'un dispositif de connexion selon le premier exemple de réalisation,
- la figure 4 se rapporte à une représentation schématique d'une pièce de jonction désassemblée et sans moyen de mise en pression, d'un dispositif de connexion selon le premier exemple de réalisation,
- la figure 5 se rapporte à une représentation schématique d'un premier exemple de réalisation d'un dispositif de connexion assemblé selon l'invention selon une vue en section dans un plan perpendiculaire au plan du contact glissant,
- la figure 6 se rapporte à une représentation schématique d'un premier exemple de réalisation d'un dispositif de connexion assemblé selon l'invention selon une vue latérale,
- la figure 7 se rapporte à une représentation schématique d'un premier exemple de réalisation d'un dispositif de connexion assemblé selon l'invention selon une vue inférieure,
- la figure 8 se rapporte à une représentation schématique d'un second exemple de réalisation d'un dispositif de connexion assemblé selon l'invention selon une vue en section dans un plan perpendiculaire au plan du contact glissant,
- la figure 9 se rapporte à une représentation schématique d'un second exemple de réalisation d'un dispositif de connexion assemblé selon l'invention selon une vue en section dans un plan perpendiculaire au plan du contact glissant.

La présente invention repose sur un dispositif 1 de connexion de deux éléments conducteurs 2, 3 d'un rail d'alimentation comprenant une surface de contact glissant 4, caractérisé en ce que le dispositif 1 comprend :
- deux pattes de connexion 2a, 3a formées par une extrémité de chacun des deux éléments conducteurs 2, 3, ces pattes de connexion 2a, 3a étant agencées pour être disposées dans des plans respectifs parallèles et décalés par rapport à la surface de contact glissant 4 du rail,
- une pièce de jonction 5 des deux pattes de connexion 2a, 3a comportant au moins une surface de contact 4a disposée de niveau avec la surface de contact glissant 4 des conducteurs 2, 3
et en ce que la pièce de jonction 5 comprend une structure en cavalier qui positionne ses jambes de part et d'autre des pattes de connexion 2a, 3a mise en contact de façon à prendre en tenaille les pattes de connexion 2a, 3a des éléments conducteurs, tout en réalisant une connexion électrique entre au moins la patte de connexion 2a, 3a d'un élément conducteur 2, 3 et la surface de contact 4a de la pièce de jonction 5 disposée de niveau avec la surface de contact glissant 4 des conducteurs.

Le dispositif 1 de connexion de l'invention permet ainsi la réalisation d'une connexion par une pièce de jonction 5 qui en comportant une face 4a positionnée de niveau avec la surface de contact glissant 4 des conducteurs 2, 3, participe à la formation d'au moins une portion du contact glissant 4 du rail d'alimentation.

La structure en cavalier de la pièce de jonction 5 permet la réalisation d'une structure apte à réunir les pattes de connexion 2a, 3a pour les maintenir en contact. Selon une spécificité de construction, le pièce de jonction 5 est en pression contre une des pattes de connexion par l'intermédiaire de la surface intérieure 4b positionnée au niveau de la jambe qui porte la surface de contact 4a de la pièce de jonction 5 disposée de niveau avec la surface de contact glissant 4 des conducteurs. Ce contact des pattes de connexion 2a, 3a autorise ainsi une connexion électrique et donc une continuité électrique le long du rail d'alimentation d'un élément conducteur 2 à un autre 3. Par ailleurs, la structure en cavalier de la pièce de jonction 5 permet la réalisation d'une cage qui entoure au moins en partie la mise en contact des deux pattes de connexion 2a, 3a. Cette construction permet ainsi de protéger le contact des pattes de connexion 2a, 3a entre elles lors du passage d'un balai le long du contact glissant du rail d'alimentation. Par ailleurs, le positionnement d'une surface 4a de la pièce de jonction 5 de niveau avec la surface de contact glissant 4 des conducteurs 2, 3 permet de combiner la protection du contact des pattes de connexion 2a, 3a avec une surface de contact glissant 4 qui n'est pas perturbée par la pièce de jonction 5.

Selon une particularité de construction, le dispositif 1 de connexion est caractérisé en ce que :
- le décalage d'une première patte 2a de connexion par rapport à la surface de contact glissant 4 des conducteurs 2, 3 forme un écart similaire à l'épaisseur de la portion de la pièce de jonction 5 qui porte la surface de contact 4a,
- le décalage de la seconde patte 3a de connexion par rapport à la surface de contact glissant 4 des conducteurs 2, 3 forme un écart similaire aux épaisseurs cumulées de la portion de la pièce de jonction 5 qui porte la surface de contact 4a et de la première patte 2a de connexion.
Cette construction du dispositif 1 de connexion permet ainsi l'obtention d'un rail d'alimentation avec une jonction entre deux portions 2, 3 de rail qui conserve une surface de contact glissant 4 constante tout en limitant l'épaisseur de la connexion entre les trois pièces que sont les conducteurs 2, 3 et la pièce de jonction 5. La connexion permet ainsi le positionnement en sandwich d'une première des pattes de connexion entre, d'une part, une portion de la pièce de jonction 5 et, d'autre part, la seconde des pattes de connexion. Ce positionnement en sandwich participe également à l'établissement d'une continuité électrique entre ces trois pièces 2, 3 et 5.

Selon une particularité de construction qui n'est pas limitative de l'invention et qui participe au positionnement facilité des pattes de connexion 2a, 3a entre les jambes de la pièce de jonction 5, les pattes de connexion 2a, 3a présentent des structures de forme sensiblement plane. Cette construction aplatie des pattes de connexion 2a, 3a permet leurs mises en contact par une juxtaposition dans le plan de l'épaisseur du rail d'alimentation en positionnant en contact des faces sensiblement plane des pattes de connexion 2a, 3a. Une telle juxtaposition des pattes de connexion 2a, 3a aplaties et décalées par rapport à la surface de contact glissant 4 des conducteurs 2, 3, autorise ainsi une mise en contact des pattes de connexion 2a, 3a sans que cette connexion ne réalise une surépaisseur du rail d'alimentation au niveau d'un point du trajet du rail d'alimentation et notamment au niveau de la surface de contact glissant 4.

Selon un exemple de construction de l'invention, de façon similaire, au moins une des jambes du cavalier qui réalise la pièce de jonction 5 est aplatie avec, d'une part, une surface qui forme la surface de contact 4a disposée de niveau avec la surface de contact glissant 4 des conducteurs et, d'autre part, une surface complémentaire avec la surface de la première patte 2a de connexion contre laquelle la jambe de la pièce de jonction 5 est en appui. La jambe de la pièce de jonction 5 est ainsi en contact juxtaposé avec la première patte 2a de connexion dans le sens de l'épaisseur du rail d'alimentation.

Selon une autre particularité de construction, le dispositif 1 de connexion est caractérisé en ce que les pattes de connexion 2a, 3a des éléments conducteurs 2, 3 comportent des formes complémentaires l'une de l'autre. Cette complémentarité de forme permet d'optimiser le contact des pattes de connexion 2a, 3a entre elles de sorte que l'intimité de la connexion soit améliorée en faisant intervenir, par exemple, une surface de contact maximisée entre les deux pattes de connexion 2a, 3a. Selon une spécificité de cette particularité de construction, la complémentarité de forme des éléments conducteurs 2, 3 peut être étendue à la pièce de jonction 5. Par ailleurs, la complémentarité de forme peut être réalisée dans un plan perpendiculaire au plan de la surface de contact glissant 4 ou à l'axe du rail d'alimentation.

Selon une autre particularité de construction, le dispositif 1 de connexion est caractérisé en ce que les pattes 2a, 3a des éléments conducteurs 2, 3 comportent au moins une interface de blocage 6 de la translation des pattes de connexion 2a, 3a des éléments conducteurs 2, 3 entre elles réalisée par une combinaison de reliefs et/ou de formes réalisant une interaction de type mâle 6a/femelle 6b. Cette combinaison de reliefs, outre la réalisation d'une complémentarité de forme qui optimise l'assemblage des pattes 2a, 3a des éléments conducteurs 2, 3, permet également d'améliorer la stabilité de la connexion. En effet, une complémentarité de formes tridimensionnelles entre les pattes de connexion 2a, 3a, notamment dans un plan perpendiculaire au plan de la surface de contact glissant 4 ou à l'axe du rail d'alimentation, permet la réalisation d'un mécanisme de blocage 6 de la translation des pattes de connexion 2a, 3a entre elles. Une telle complémentarité de forme tridimensionnelle permet ainsi un verrouillage de la translation des pattes de connexion 2a, 3a entre elles lorsque ces pattes de connexion 2a, 3a sont maintenues en contact entre elles.

Selon un exemple de construction qui n'est pas limitatif de la réalisation de l'invention, une première des pattes de connexion comprend une déformation 6a sous la forme d'un relief par rapport au plan de la patte de connexion et la seconde des pattes de connexion comprend un creux ou un orifice 6b dans son épaisseur qui est apte à recevoir le relief de la première patte de connexion. La mise en contact des surfaces dédiées respectives des pattes de connexion 2a, 3a est réalisée conjointement à l'insertion du relief 6a de la première patte de connexion dans le creux 6b de l'épaisseur de la seconde patte de connexion. Le maintien par pincement des deux pattes de connexion 2a, 3a en pression permet de conserver l'insertion du relief 6a de la première patte de connexion dans le creux 6b de l'épaisseur de la seconde patte de connexion et limite, voire bloque, la translation des deux pattes de connexion 2a, 3a entre elles.

De façon complémentaire, une construction similaire peut être réalisée entre une jambe de la pièce de jonction 5 et la patte de connexion 2a en appui contre cette jambe pour empêcher la translation de la patte de connexion 2a par rapport à la pièce de jonction 5.

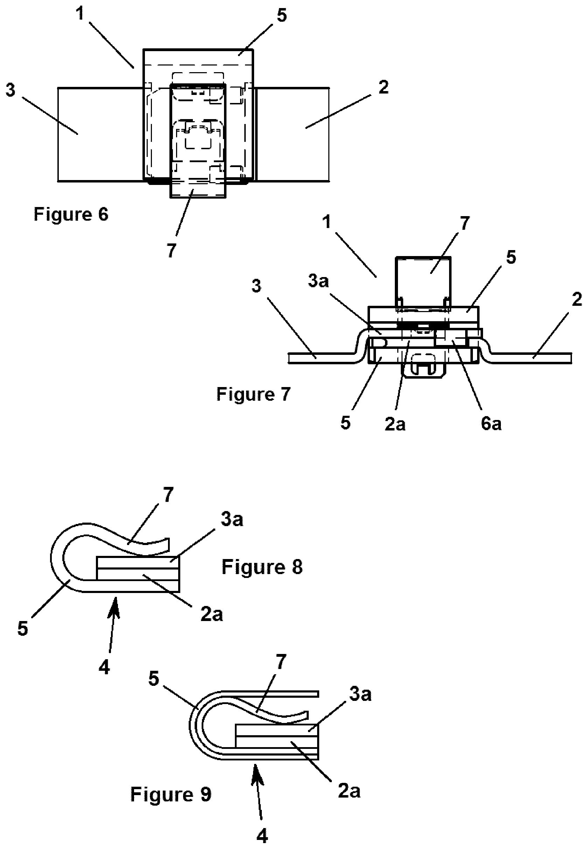

Selon une spécificité de cette particularité de construction, la pièce de jonction 5 intègre un moyen de mise en pression 7 qui appuie contre la surface d'au moins une patte de connexion pour maintenir les pattes de connexion 2a, 3a pressées ensemble. Ce moyen de mise en pression 7 peut être réalisé par un moyen ressort ou encore par une vis de pression montée sur une des jambes de la pièce de jonction et qui délivre une pression de contact contre les pattes de connexion 2a, 3a juxtaposées pour être poussées en tenaille contre la surface intérieure 4b de la pièce de jonction 5 positionnée au niveau de la jambe qui porte la surface de contact 4a de la pièce de jonction 5. Selon le type de réalisation de cette caractéristique, le moyen de mise en pression 7 est formé par un élément indépendant qui peut être monté avec la pièce de jonction 5 ou, alternativement, le moyen de mise en pression 7 est formé par la pièce de jonction 5 elle-même, par exemple lorsque le moyen de mise en pression est un ressort comme représenté par la figure 8. Selon un exemple de construction, lorsque ce moyen de mise en pression 7 est un moyen ressort, ce moyen de mise en pression 7 est construit de façon à au moins mettre en pression les pattes de connexion 2a, 3a l'une contre l'autre. Cette mise en pression est exercée par au moins une portion du moyen ressort 7 qui prend appui contre une des faces d'au moins une patte de connexion. La seconde patte de connexion est alors maintenue bloquée par une seconde portion du moyen ressort 7 ou par une partie de la pièce de jonction 5. Ce blocage de la seconde patte de connexion peut notamment être obtenu facilement lorsque la pièce de jonction 5 est réalisée sous la forme d'une structure en cavalier.

Selon une spécificité de construction du moyen de mise en pression 7, celui-ci est réalisé d'au moins un matériau électriquement conducteur de façon à assurer une continuité électrique entre au moins une des pattes de connexion et la surface de contact 4a de la pièce de jonction 5.

Selon une spécificité d'arrangement du moyen de mise en pression 7, la pièce de jonction 5 comprenant au moins une structure en cavalier, le moyen de mise en pression 7 de type ressort est positionné entre les jambes du cavalier. Ainsi, le moyen ressort 7 prend appui contre au moins une jambe de la pièce de jonction 5 pour exercer une pression contre au moins une des pattes de connexion 2a, 3a positionnée entre les jambes de la structure en cavalier. Un exemple de construction de cette spécificité est illustré par la figure 9.

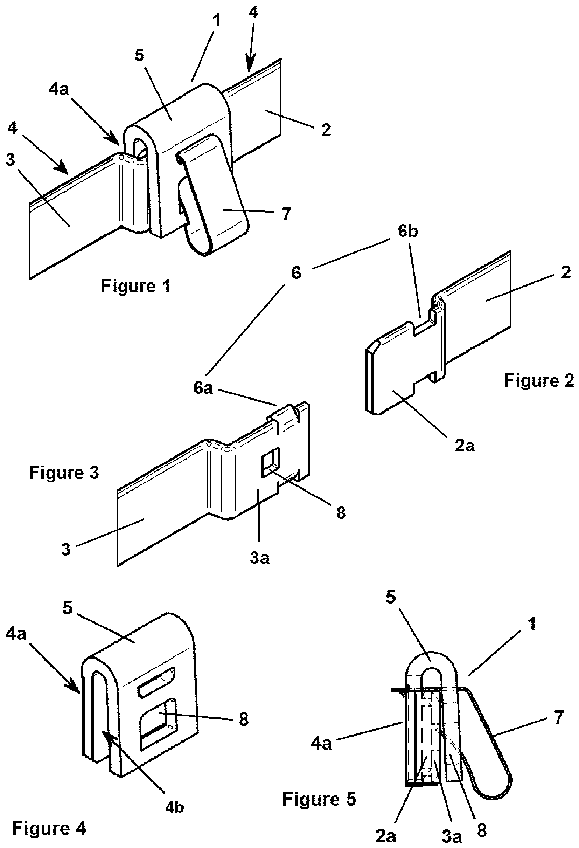

Selon une spécificité alternative de construction, le moyen de mise en pression 7 de type ressort est monté sur la structure de la pièce de jonction 5 de façon à comporter au moins une première partie positionnée à l'extérieur de la pièce de jonction 5 et une seconde partie disposée traversante d'une portion de la pièce de jonction 5 au niveau d'une orifice 8 dédié. Un exemple de réalisation d'un tel arrangement du moyen ressort 7 avec la pièce de jonction 5 peut consister en celui illustré sur la figure 1.

Selon une spécificité complémentaire du moyen de mise en pression 7 de type ressort, quel que soit l'arrangement du moyen ressort 7 par rapport à la pièce de jonction 5, celui-ci comprend une première extrémité fixe avec la structure de la pièce de jonction 5 et une seconde extrémité apte à être en appui contre une patte de connexion. Selon l'arrangement, la patte de connexion contre laquelle le moyen ressort 7 exerce une pression peut correspondre à chacune des pattes de connexion 2a, 3a du dispositif.

Selon une particularité de construction, la structure de la pièce de jonction 5 est formée d'un seul matériau électriquement conducteur. Cette construction permet ainsi d'optimiser la continuité électrique entre, d'une part, les pattes de connexion 2a, 3a et, d'autre part, la surface de contact 4a de la pièce de jonction 5 disposée de niveau avec la surface de contact glissant 4 des conducteurs.

De façon alternative, la structure de la pièce de jonction 5 est formée d'au moins deux matières :
- une première matière électriquement conductrice disposée au niveau d'une portion formant la surface de contact 4a de la pièce de jonction 5 et d'une portion de contact électrique avec une patte de connexion 2a, 3a,
- une seconde matière aux propriétés électriques différentes de celle de la première matière, qui réalise toute ou partie de la structure en cavalier destinée à prendre en tenaille les pattes de connexion 2a, 3a.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif (1) de connexion de deux éléments conducteurs (2, 3) d'un rail d'alimentation comprenant une surface de contact glissant (4), le dispositif (1) comprenant:
- deux pattes de connexion (2a, 3a) formées par une extrémité de chacun des deux éléments conducteurs (2, 3), ces pattes de connexion (2a, 3a) étant agencées pour être disposées dans des plans respectifs parallèles et décalés par rapport à la surface de contact glissant (4) du rail,
- une pièce de jonction (5) des deux pattes de connexion (2a, 3a) comportant au moins une surface de contact (4a) disposée de niveau avec la surface de contact glissant (4) des conducteurs (2, 3), **caractérisé en ce que** la pièce de jonction (5) comprend une structure en cavalier qui positionne ses jambes de part et d'autre des pattes de connexion (2a, 3a) mise en contact de façon à prendre en tenaille les pattes de connexion (2a, 3a) des éléments conducteurs, tout en réalisant une connexion électrique entre au moins la patte de connexion (2a, 3a) d'un élément conducteur (2, 3) et la surface de contact (4a) de la pièce de jonction (5) disposée de niveau avec la surface de contact glissant (4) des conducteurs.

2. Dispositif (1) de connexion selon la revendication 1, **caractérisé en ce que** :
- le décalage d'une première patte (2a) de connexion par rapport à la surface de contact glissant (4) des conducteurs (2, 3) forme un écart similaire à l'épaisseur de la portion de la pièce de jonction (5) qui porte la surface de contact (4a),
- le décalage de la seconde patte (3a) de connexion par rapport à la surface de contact glissant (4) des conducteurs (2, 3) forme un écart similaire aux épaisseurs cumulées de la portion de la pièce de jonction (5) qui porte la surface de contact (4a) et de la première patte (2a) de connexion.

3. Dispositif (1) de connexion selon une des revendications précédentes, **caractérisé en ce que** les pattes de connexion (2a, 3a) des éléments conducteurs (2, 3) comportent des formes complémentaires l'une de l'autre.

4. Dispositif (1) de connexion selon une des revendications précédentes, **caractérisé en ce que** les pattes (2a, 3a) des éléments conducteurs (2, 3) comportent au moins une interface de blocage (6) de la translation des pattes de connexion (2a, 3a) des éléments conducteurs (2, 3) entre elles réalisée par une combinaison de reliefs et/ou de formes réalisant une interaction de type mâle/femelle (6a, 6b).

5. Dispositif (1) de connexion selon une des revendications précédentes, **caractérisé en ce que** la pièce de jonction (5) intègre un moyen de mise en pression (7) qui appuie contre la surface d'au moins une patte de connexion (2a) pour maintenir les pattes de connexion (2a, 3a) pressées ensemble.

6. Dispositif (1) de connexion selon la revendication 5, **caractérisé en ce que**, la pièce de jonction (5) comprenant au moins une structure en cavalier, le moyen de mise en pression (7) est de type ressort et est positionné entre les jambes du cavalier.

7. Dispositif (1) de connexion selon la revendication 5, **caractérisé en ce que** le moyen de mise en pression (7) de type ressort est monté sur la structure de la pièce de jonction (5) de façon à comporter au moins une première partie positionnée à l'extérieur de la pièce de jonction (5) et une seconde partie disposée traversante d'une portion de la pièce de jonction (5) au niveau d'une orifice (8) dédié.

8. Dispositif (1) de connexion selon une des revendications 5 à 7, **caractérisé en ce que** le moyen de mise en pression (7) de type ressort comprend une première extrémité fixe avec la structure de la pièce de jonction (5) et une seconde extrémité apte à être en appui contre une patte de connexion.

9. Dispositif (1) de connexion selon une des revendications 1 à 8, **caractérisé en ce que** la structure de la pièce de jonction (5) est formée d'un seul matériau électriquement conducteur.

10. Dispositif (1) de connexion selon une des revendications 1 à 8, **caractérisé en ce que** la structure de la pièce de jonction (5) est formée d'au moins deux matières :
- une première matière électriquement conductrice disposée au niveau d'une portion formant la surface de contact (4a) de la pièce de jonction (5) et d'une portion de contact électrique avec une patte de connexion (2a, 3a),
- une seconde matière aux propriétés électriques différentes de celle de la première matière, qui réalise toute ou partie de la structure en cavalier destinée à prendre en tenaille les pattes de connexion (2a, 3a).

## Patentansprüche

1. Vorrichtung (1) zur Verbindung zweier elektrisch leitender Elemente (2, 3) einer Versorgungsschiene, eine Gleitkontaktfläche (4) umfassend, wobei die Vorrichtung (1) umfasst:
- zwei Verbindungsklauen (2a, 3a), durch ein Ende jedes der beiden Leiterelemente (2, 3) gebildet, wobei diese Verbindungsklauen (2a, 3a) dafür eingerichtet sind, in zugehörigen parallelen und relativ zur Gleitkontaktfläche (4) der Schiene versetzten Ebenen angeordnet zu werden,
- ein Stück (5) zur Verbindung der beiden Verbindungsklauen (2a, 3a), das mindestens eine Kontaktfläche (4a) aufweist, die auf Höhe mit den Gleitkontaktflächen (4) der Leiter (2, 3) angeordnet ist,
**dadurch gekennzeichnet, dass** das Verbindungsstück (5) eine Reiterstruktur umfasst, die ihre Schenkel beiderseits der in Kontakt gebrachten Verbindungsklauen (2a, 3a) positioniert, derart, dass sie die Verbindungsklauen (2a, 3a) der Leiterelemente einklemmen und dabei eine elektrische Verbindung zwischen mindestens der Verbindungsklaue (2a, 3a) eines Leiterelementes (2, 3) und der Kontaktfläche (4a) des Verbindungsstückes (5) herstellt, das in Höhe mit der Gleitkontaktfläche (4) der Leiter positioniert ist.

2. Verbindungsvorrichtung (1) nach Patentanspruch 1, **dadurch gekennzeichnet, dass**:
- der Versatz einer ersten Verbindungsklaue (2a) relativ zur Gleitkontaktfläche (4) der Leiter (2, 3) einem Abstand entspricht, der der Dicke des Teiles des Verbindungsstückes (5) ähnlich ist, das die Kontaktfläche (4a) trägt,
- der Versatz der zweiten Verbindungsklaue (3a) relativ zur Gleitkontaktfläche (4) der Leiter (2, 3) einem Abstand entspricht, der den summierten Dicken des Teiles des Verbindungsstückes (5), das die Kontaktfläche (4a) trägt, und der ersten Verbindungsklaue (2a) ähnlich ist.

3. Verbindungsvorrichtung (1) nach einem der vorangehenden Patentansprüche, **dadurch gekennzeichnet, dass** die Verbindungsklauen (2a, 3a) der Leiterelemente (2, 3) zueinander komplementäre Formen haben.

4. Verbindungsvorrichtung (1) nach einem der vorangehenden Patentansprüche, **dadurch gekennzeichnet, dass** die Verbindungsklauen (2a, 3a) der Leiterelemente (2, 3) mindestens eine Schnittstelle zur Sperrung (6) der Verschiebung der Verbindungsklauen (2a, 3a) der Leiterelemente (2, 3) zueinander aufweisen, die in einer Kombination von Reliefs oder Formen besteht, die eine Nut-Feder-Zusammenwirkung (6a, 6b) schaffen.

5. Verbindungsvorrichtung (1) nach einem der vorangehenden Patentansprüche, **dadurch gekennzeichnet, dass** das Verbindungsstück (5) ein Druckmittel (7) enthält, das gegen die Oberfläche mindestens einer Verbindungsklaue (2a) drückt, um die Verbindungsklauen (2a, 3a) zusammengedrückt zu halten.

6. Verbindungsvorrichtung (1) nach Patentanspruch 5, **dadurch gekennzeichnet, dass** das Druckmittel (7), indem das Verbindungsstück (5) eine Reiterstruktur umfasst, von der Art einer Feder und zwischen den Schenkeln des Reiters angeordnet ist.

7. Verbindungsvorrichtung (1) nach Patentanspruch 5, **dadurch gekennzeichnet, dass** das federartige Druckmittel (7) an der Struktur des Verbindungsstückes (5) derart montiert ist, dass es mindestens einen ersten Teil umfasst, der an der Außenseite des Verbindungsstückes (5) angeordnet ist, und einen zweiten Teil, der einen Teil des Verbindungsstückes (5) durchquerend in Höhe einer dafür vorgesehenen Öffnung (8) angeordnet ist.

8. Verbindungsvorrichtung (1) nach einem der Patentansprüche 5 bis 7, **dadurch gekennzeichnet, dass** das federartige Druckmittel (7) ein erstes, an der Struktur des Verbindungsstückes (5) festes Ende umfasst und ein zweites Ende, geeignet, an einer Verbindungsklaue anzuliegen.

9. Verbindungsvorrichtung (1) nach einem der Patentansprüche 1 bis 8, **dadurch gekennzeichnet, dass** die Struktur des Verbindungsstückes (5) aus einem einzigen elektrisch leitenden Werkstoff geformt ist.

10. Verbindungsvorrichtung (1) nach einem der Patentansprüche 1 bis 8, **dadurch gekennzeichnet, dass** die Struktur des Verbindungsstückes (5) aus mindestens zwei Werkstoffen geformt ist:
- aus einem ersten elektrisch leitenden Werkstoff, der in Höhe eines Teiles angeordnet ist, der die Kontaktfläche (4a) des Verbindungsstückes (5), und einem Teil für den elektrischen Kontakt mit einer Verbindungsklaue (2a, 3a) bildet,
- aus einem zweiten Werkstoff mit anderen elektrischen Eigenschaften als der erste Werkstoff, der die gesamte oder einen Teil der Reiterstruktur, der dazu bestimmt ist, die Verbindungsklauen (2a, 3a) einzuklemmen, bildet.

## Claims

1. Device for connecting (1) two conductive elements (2, 3) of a conductor rail comprising a sliding contact surface (4), the device (1) comprising:
- two connection tabs (2a, 3a) formed by one end of each of the two conductive elements (2, 3), the connection tabs (2a, 3a) being arranged to be placed in respective parallel planes and offset with respect to the sliding contact surface (4) of the rail,
- a junction piece (5) of the two connection tabs (2a, 3a) comprising at least one contact surface (4a) placed level with the sliding contact surface (4) of the conductors (2, 3),
**characterised in that**
the junction piece (5) comprises a jumper structure which positions its legs on either side of the connection tabs (2a, 3a) in contact so as to grip the connection tabs (2a, 3a) of the conductive elements, while making an electrical connection between at least the connection tab (2a, 3a) of a conductive element (2, 3) and the contact surface (4a) of the junction piece (5) placed level with the sliding contact surface (4) of the conductors.

2. Connection device (1) according to claim 1, **characterised in that**:
- the offset of a first connection tab (2a) with respect to the sliding contact surface (4) of the conductors (2, 3) forms a gap similar to the thickness of the portion of the junction piece (5) which supports the contact surface (4a),
- the offset of a second connection tab (3a) with respect to the sliding contact surface (4) of the conductors (2, 3) forms a gap similar to cumulative thicknesses of the portion of the junction piece (5) supporting the contact surface (4a) and the first connection tab (2a).

3. Connection device (1) according to any of the preceding claims, **characterised in that** the connection tabs (2a, 3a) of the conductive elements (2, 3) comprise shapes that are complementary to each other.

4. Connection device (1) according to any of the preceding claims, **characterised in that** the tabs (2a, 3a) of the conductive elements (2, 3) comprise at least one locking interface (6) of the translation between the connection tabs (2a, 3a) of the conductive elements (2, 3) made by a combination of reliefs and/or forms forming a type of male/female interaction (6a, 6b).

5. Connection device (1) according to any of the preceding claims, **characterised in that** the junction piece (5) incorporates a spring-type pressurising means (7) which presses against the surface of at least one connection tab (2a) to hold the connection tabs (2a, 3a) pressed together.

6. Connection device (1) according to claim 5, **characterised in that** the junction piece (5) comprises at least one jumper structure, and the spring-type pressurising means (7) is positioned between the legs of the jumper.

7. Connection device (1) according to claim 5, **characterised in that** the spring-type pressurising means (7) is mounted on the structure of the junction piece (5) so as to comprise at least a first portion positioned outside the junction piece (5) and a second portion placed through a portion of the junction piece (5) at a dedicated orifice (8).

8. Connection device (1) according to any of claims 5 to 7, **characterised in that** the spring-type pressurising means (7) comprises a fixed first end with the structure of the junction piece (5) and a second end adapted to bear against a connection tab.

9. Connection device (1) according to any of claims 1 to 8, **characterised in that** the structure of the junction piece (5) is formed of a single electrically conductive material.

10. Connection device (1) according to any of claims 1 to 8, **characterised in that** the structure of the junction piece (5) is formed of at least two materials:
- a first electrically conductive material placed level with a portion forming the contact surface (4a) of the junction piece (5) and an electrical contact portion with a connection tab (2a, 3a),
- a second material with different electrical properties from those of the first material, which forms all or part of the jumper structure for gripping the connection tabs (2a, 3a).
